# FASCICULE DE BREVET EUROPEEN

(11) **EP 1 034 674 B1**
(45) Date de publication et mention de la délivrance du brevet: **21.04.2004**
(21) Numéro de dépôt: 98955712.9
(22) Date de dépôt: 20.11.1998
(51) Int. Cl.: H04Q 7/30

(54) **STATION DE BASE POUR RADIOTELEPHONE MOBILE**
BASISSTATION FÜR EIN MOBILTELEFON
BASE STATION FOR MOBILE PHONE

(30) Priorité: 24.11.1997 FR 9714716
(43) Date de publication de la demande: 13.09.2000
(73) Titulaire: NORTEL NETWORKS SA, 78280 Guyancourt (FR)
(72) Inventeur: VINCENT, Paul, F-92500 Rueil-Malmaison (FR); LUCIDARME, Thierry, F-78180 Montigny-le-Bretonneux (FR); DUPLESSIS, Philippe, F-92700 Colombes (FR)
(74) Mandataire: Loisel, Bertrand
(86) Numéro de dépôt international: PCT/FR1998/002489
(87) Numéro de publication internationale: WO 1999/027728

(56) Documents cités:
- WO-A-93/10643
- GB-A- 2 309 357

## Description

La présente invention concerne un équipement téléphonique de type station de base de radiotéléphonie cellulaire pour un réseau multicouches.

L'opérateur d'un réseau de radiotéléphonie cellulaire répartit sur le territoire à couvrir les stations de base du réseau, dont les zones de couverture définissent les cellules. Ces stations de base sont reliées à d'autres infrastructures du service mobile pour l'acheminement des communications et le raccordement avec les réseaux filaires.

Avec la densification des réseaux cellulaires, les opérateurs installent de plus en plus souvent des réseaux dits microcellulaires ou multicouches, dans lesquels des stations de base de relativement faible puissance desservent des cellules de petite taille appelées microcellules (pour les cellules les plus petites, on parle parfois de picocellules ; on considérera ici que ces picocellules ne sont qu'un cas particulier des microcellules), et des stations de base de plus grande portée sont en outre prévues pour former une couche superposée de cellules parapluie, ou macrocellules. Les microcellules sont utilisées dans les zones à forte densité de trafic local.

Certaines des ressources radio sont utilisées dans chaque cellule pour l'émission par la station de base de signaux de balise permettant sa détection par les stations mobiles se trouvant dans la cellule.

Dans l'optimisation d'un système de radiotéléphonie cellulaire, il est primordial de limiter autant que possible les interférences entre les différentes stations de base, afin de bénéficier au mieux du principe de réutilisation des fréquences.

Cet impératif va plutôt à l'encontre de l'exploitation intensive des ressources radio disponibles. Il conduit à des limitations d'autant plus sensibles qu'on cherche à offrir une grande densité de communications, particulièrement dans le cas des microcellules d'un réseau multicouches.

WO 93/10643 décrit un système de radiocommunication à ressources partagées ("*trunked*") utilisant une technique de multiplexage temporel de canaux sur une fréquence porteuse. Les canaux multiplexés comprennent des canaux de signalisation dédiés et des canaux de voix. Lorsqu'il y a peu d'activité sur les canaux de signalisation, le document propose de remplacer ces canaux de signalisation, en partie ou en totalité, par des canaux de voix. Il n'est pas fait mention d'un signal de balise qu'émettrait le site répéteur pour être détecté par les stations mobiles, comme requis dans les systèmes cellulaires.

Un but de la présente invention est d'accroître les capacités de communication radio d'une microcellule, tout en limitant les interférences entre stations de base afin d'optimiser l'utilisation des ressources radio disponibles.

L'invention propose ainsi une station de base d'une microcellule d'un réseau multicouches, telle qu'énoncée dans la revendication annexée.

Les communications mettant en jeu une station mobile, pendant lesquelles l'interface air cesse d'émettre le signal de balise (elle utilise le canal physique correspondant pour le lien radio avec cette station mobile), sont celles qui requièrent l'établissement avec ladite station mobile d'un lien radio qui sature des ressources radio allouées à l'équipement. La station de base, ne pouvant plus accepter de nouvelle communication, n'a plus besoin d'être détectée par les stations mobiles qui communiqueront plutôt par l'intermédiaire d'autres stations de base si nécessaire. En particulier, la station de base cessant d'émettre son signal de balise peut être relayée par celle d'une cellule parapluie. Dès que des ressources radio sont libérées, le signal de balise est rétabli et la station peut de nouveau desservir d'autres mobiles.

L'invention permet d'augmenter le nombre de communications qui peuvent se dérouler en même temps dans la microcellule. Ce nombre n'étant pas très élevé (par exemple inférieur à 10), le canal supplémentaire libéré par la cessation du signal de balise est très appréciable.

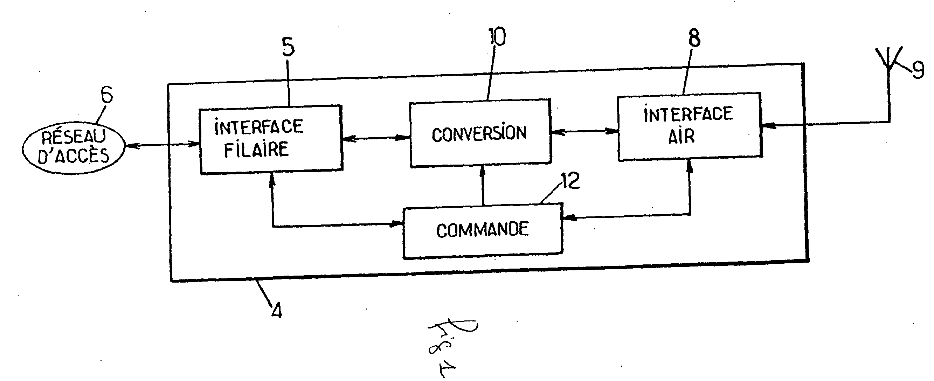

D'autres particularités et avantages de l'invention apparaîtront dans la description ci-après d'un exemple de réalisation non limitatif en référence au dessin annexé, dans lequel la figure unique est un schéma synoptique d'un équipement selon l'invention.

La figure montre un équipement téléphonique 4 constituant une station de base de radiotéléphonie cellulaire destinée à être installée pour desservir une microcellule d'un réseau multicouches.

L'équipement 4 comporte une interface filaire 5 à raccorder à un réseau de télécommunication filaire 6.

Le réseau filaire de raccordement 6 est celui qui relie la station de base aux autres entités (BSC, MSC) du réseau cellulaire qui supervisent les stations de base et assurent l'interface avec le réseau commuté. L'interface 5 fonctionne de façon classique selon les protocoles du réseau filaire 6.

L'équipement 4 comporte en outre une interface air 8 reliée à l'antenne d'émission/réception 9. La portée radio de l'équipement est typiquement celle de quelques centaines de mètres au plus.

L'équipement 4 représenté sur la figure comporte une unité de conversion 10 entre les interfaces 5 et 8. Cette unité 10 assure les diverses opérations de conversion analogique-numérique ou numérique-analogique, de codage, décodage ou transcodage de parole et de mise en forme des trames de signal, requises pour faire communiquer les interfaces 5 et 8. Une unité de commande 12 intercepte les messages de signalisation reçus sur les interfaces 5 et 8, et commande de façon appropriée ces interfaces 5, 8 et l'unité de conversion 10.

Dans l'exemple particulier considéré à titre d'illustration, l'interface filaire 5 et l'interface air 8 fonctionnent conformément au système de radiotéléphonie européen GSM utilisé dans de nombreux réseaux cellulaires.

En particulier, l'interface 8 constitue un canal de diffusion commun (BCCH) à une certaine fréquence balise d'émission. Cette fréquence sur laquelle la station émet en permanence, peut être affectée à la station par l'opérateur du réseau cellulaire.

Sur le canal BCCH, la station de base 4 émet un signal de balise portant diverses informations de signalisation. Ce signal de balise est émis avec un rapport cyclique ρ. Etant donné que le système GSM est à accès multiple par répartition dans le temps (TDMA), avec subdivision de chaque trame TDMA en *N*=8 intervalles de temps successifs pouvant être affectés à des émissions/réceptions différentes, le signal de balise peut être émis pendant *n* intervalles de temps sur *N* (1≤*n*≤*N*), ce qui donne ρ=*n*/*N*.

On considère le cas d'une microcellule GSM à laquelle est allouée une seule fréquence, autorisant jusqu'à *N*=8 canaux TDMA. Le premier intervalle de temps (par exemple) de chaque trame véhicule le signal de balise portant l'information pertinente pour la cellule, et les autres intervalles de temps sont remplis soit par des communications avec des mobiles dans la microcellule soit par des bits de bourrage (dummy), pour que la station de base occupe la fréquence balise comme requis.

Tant que la station supporte jusqu'à *N*-1=7 communications avec des mobiles, le signal de balise reste émis sur le premier intervalle de temps. Pour établir une huitième communication avec une station mobile, la station de base alloue le premier intervalle de temps sur la fréquence balise pour la liaison descendante. Elle cesse ainsi d'émettre le signal de balise, et le remplace par le signal qu'elle produit sur la liaison descendante dans le cadre de la communication, saturant ainsi les ressources radio qui lui sont allouées. Dès que l'une des huit communications en cours est terminée, la station de base dispose de nouveau d'un intervalle de temps qu'elle utilise pour réémettre le signal de balise. Si cet intervalle de temps n'est pas le premier, un transfert de canal peut être utile pour libérer le premier intervalle de temps pour la réémission du signal de balise.

Ce procédé permet d'augmenter de 14% la capacité de communication dans la microcellule.

Pendant la période de non-émission du signal de balise, les stations mobiles situées dans la microcellule auront pu basculer vers une autre cellule, en particulier vers une macrocellule, et il n'aura pas été possible que d'autres stations mobiles se localisent auprès de la microcellule. Dès rétablissement du signal de balise, ces stations pourront de nouveau être desservies par la station de base de la microcellule.

## Revendications

1. Station de base d'une microcellule d'un réseau cellulaire de radiocommunication multicouches, comprenant une interface filaire (5) pour le raccordement à un réseau filaire d'accès (6), et une interface air (8) pour communiquer par radio avec des stations mobiles selon un mode de fonctionnement à accès multiple par répartition dans le temps, avec des trames de signal divisées chacune en un nombre N d'intervalles de temps successifs, dans laquelle des communications téléphoniques mettant en jeu une station mobile située à portée radio de ladite station de base peuvent être établies par l'intermédiaire du réseau filaire au moyen de l'interface filaire et de l'interface air, et dans laquelle l'interface air est agencée pour émettre un signal radio sur chaque intervalle de temps des trames sur une fréquence de balise, dans laquelle le signal radio émis sur la fréquence de balise comporte un signal de balise porteur d'informations de signalisation, sur au moins un intervalle de temps, tant que N-1 au plus des intervalles de temps de la trame sur la fréquence de balise sont occupés par des communications avec des stations mobiles, **caractérisée en ce que** l'interface air est agencée pour cesser d'émettre le signal de balise lorsque les N intervalles de temps sur la fréquence de balise sont occupés par des communications avec des stations mobiles.

## Claims

1. A microcell base station for a multilayer radio communication cellular network, comprising a wire interface (5) for connection to a wire access network (6) and an air interface (8) for communicating by radio with mobile station in accordance with a time division multiple access operating mode, with signal frames each divided into a number N of successive timeslots, wherein telephone communications involving a mobile station located within radio range of the equipment can be established through the wire network by means of the wire interface and the air interface, and wherein the air interface is arranged to transmit a radio signal in each timeslot of the frames on a beacon frequency, wherein the radio signal transmitted on the beacon frequency comprises a beacon signal carrying signalling information, in at least one timeslot as long as at most N-1 of the timeslots of the frame on the beacon frequency are occupied by communications with mobile stations, **characterized in that** the air interface stops transmitting the beacon signal when the N timeslots on the beacon frequency are occupied by communications with mobile stations.

## Patentansprüche

1. Basisstation einer Mikrozelle eines Mehrzellen-Funkkommunikations-Zellularnetzes, die eine drahtgebundene Schnittstelle (5) für die Verbindung zu einem drahtgebundenen Zugangsnetz (6) umfasst, sowie eine Luftschnittstelle (8) zur Funkkommunikation mit den Mobilstationen nach einer Funktionsweise mit Mehrfachzugang durch zeitliche Aufteilung, mit Signal-Zeitrahmen, die jeweils in eine Anzahl N aufeinander folgender Zeitintervalle aufgeteilt sind, bei der Telefonverbindungen, die über eine Mobilstation laufen, die sich in Funknähe dieser Basisstation befindet, über das drahtgebundene Netz mittels der drahtgebundenen Schnittstelle und der Luftschnittstelle hergestellt werden können, und bei der die Luftschnittstelle so eingerichtet ist, dass sie in jedem Zeitintervall der Zeitrahmen auf einer Leitfrequenz ein Funksignal übermittelt, bei der das auf der Leitfrequenz ausgestrahlte Funksignal in mindestens einem Zeitintervall ein Leitsignal umfasst, das Träger von Signalisierungsdaten ist, solange höchstens N-1 der Zeitintervalle des Zeitrahmens auf der Leitfrequenz durch Verbindungen mit Mobilstationen belegt sind, **dadurch gekennzeichnet, dass** die Luftschnittstelle so eingerichtet ist, dass sie kein Leitsignal mehr aussendet, wenn die N Zeitintervalle auf der Leitfrequenz durch Verbindungen mit Mobilstationen belegt sind.
